# EUROPEAN PATENT APPLICATION

(11) **EP 4 745 002 A1**
(43) Date of publication of application: **20.05.2026**
(21) Application number: 24842009.3
(22) Date of filing: 25.04.2024
(51) Int. Cl.: B62D 1/187

(54) **CLEARANCE ADJUSTMENT DEVICE FOR STEERING COLUMN AND VEHICLE**

(30) Priority: 14.07.2023 CN 202310873194
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: LI, Fuhai, Ningbo, Zhejiang 315899 (CN); DING, Lei, Ningbo, Zhejiang 315899 (CN); LUO, Lixin, Ningbo, Zhejiang 315899 (CN); GENG, Mingxing, Ningbo, Zhejiang 315899 (CN); MA, Zuguo, Ningbo, Zhejiang 315899 (CN)
(74) Representative: Boult Wade Tennant LLP
(86) International application number: PCT/CN2024/089760
(87) International publication number: WO 2025/016009

(57) **Abstract**

A clearance adjustment device for a steering column and a vehicle. The clearance adjustment device includes an inner adjustment plate (100), a middle adjustment plate (200) and an outer adjustment plate (300), where the outer adjustment plate (300) has a first groove (310), at least a portion of the middle adjustment plate (200) is located in the first groove (310), and the inner adjustment plate (100) is crimped to the middle adjustment plate (200). The clearance adjustment device further includes a first adjustment mechanism (400), where a first mounting groove (210) is provided on a side of the middle adjustment plate (200) facing a side wall of the first groove (310), and the first adjustment mechanism (400) is located in the first mounting groove (210); and one end of the first adjustment mechanism (400) is movably abutted against the side wall of the first groove (310) in a first direction, and the other end of the first adjustment mechanism (400) is movably abutted against a groove wall of the first mounting groove (210) in a second direction, such that the middle adjustment plate (200) is pressed against the outer adjustment plate (300) in the second direction, and the first direction is perpendicular to the second direction.

## Description

The present disclosure claims priority to Chinese Patent Application No. 202310873194.5 filed with China National Intellectual Property Administration on July 14, 2023, and entitled "Clearance Adjustment Device for Steering Column and Vehicle", which is hereby incorporated by reference in its entirety.

### TECHNICAL FIELD

The present application relates to the technical field of vehicle body stability systems, and in particular relates to a clearance adjustment device for a steering column and a vehicle.

### BACKGROUND

During the driving process of a vehicle, various vibrations on the road surface are transmitted to the steering column through the steering gear, and further transmitted to the steering wheel by the steering column, which affects the driver's driving experience. By providing a clearance adjustment device, the steering column can be connected to the vehicle body, so as to reduce the displacement of the steering column in the radial direction and axial direction, thereby improving the rigidity and stability of the steering column.

In the related art, the clearance adjustment device may include an inner adjustment plate, a middle adjustment plate and an outer adjustment plate. Both the inner adjustment plate and the middle adjustment plate may move relative to the outer adjustment plate in the axial direction of the steering column. The outer adjustment plate is connected to the vehicle body, and the inner adjustment plate is connected to the steering column. Through this clearance adjustment device, a displacement of the steering column in the radial direction and axial direction can be restricted, so as to improve the rigidity of the steering column.

However, there is a gap between the middle adjustment plate and the outer adjustment plate of the clearance adjustment device in the above-mentioned related art, which affects the stability of the steering column and reduces the vehicle driving stability.

### SUMMARY

Embodiments of the present application provide a clearance adjustment device for a steering column and a vehicle, for solving the technical problem in the above-mentioned related art that a gap between the middle adjustment plate and the outer adjustment plate of the clearance adjustment device affects the stability of the steering column and reduces the driving stability of vehicle.

To achieve the above object, the embodiments of the present application provide the following technical solutions.

A first aspect of the embodiments of the present application provides a clearance adjustment device for a steering column, including an inner adjustment plate, a middle adjustment plate, and an outer adjustment plate;
the outer adjustment plate has a first groove, and at least a portion of the middle adjustment plate is located in the first groove;
the inner adjustment plate is crimped to the middle adjustment plate, and the inner adjustment plate is configured to be connected to the steering column;
the clearance adjustment device further includes a first adjustment mechanism, a first mounting groove is provided on a side of the middle adjustment plate facing a side wall of the first groove, and the first adjustment mechanism is located in the first mounting groove;
one end of the first adjustment mechanism is movably abutted against the side wall of the first groove in a first direction, and the other end of the first adjustment mechanism is movably abutted against a groove wall of the first mounting groove in a second direction, such that the middle adjustment plate is pressed against the outer adjustment plate in the second direction; and the first direction is perpendicular to the second direction.

On the basis of the above technical solutions, the present application may also provide the following improvements.

In one possible implementation, the first adjustment mechanism includes a first adjustment assembly and a first wedge pressing plate;
the first wedge pressing plate has a first wedge surface and a first abutting surface opposite to the first wedge surface, and the first adjustment assembly has a second wedge surface matched with the first wedge surface;
the first abutting surface of the first wedge pressing plate is movably abutted against the side wall of the first groove in the first direction under a drive of the first adjustment assembly;
the first adjustment assembly moves in the second direction and presses against the middle adjustment plate and the outer adjustment plate through the first wedge pressing plate.

In one possible implementation, the first adjustment assembly includes a first adjustment nut and a second wedge pressing plate, and the second wedge pressing plate has a second wedge surface;
the second wedge pressing plate is located on a side of the first wedge pressing plate away from the outer adjustment plate, and the second wedge surface abuts against the first wedge surface;
the first adjustment nut is in threaded connection with the middle adjustment plate, and one end of the first adjustment nut facing the first mounting groove abuts against the second wedge pressing plate, and the second wedge pressing plate is driven by the first adjustment nut to move in the second direction.

In one possible implementation, the first adjustment assembly further includes a first spring plate, the first spring plate is arranged between the first adjustment nut and the second wedge pressing plate, and the first adjustment nut is connected to the second wedge pressing plate through the first spring plate.

In one possible implementation, the middle adjustment plate is provided with a first mounting opening and a second mounting opening; the second mounting opening is provided on a surface of the middle adjustment plate in the second direction, the first mounting opening is provided on a surface of the middle adjustment plate facing the side wall of the first groove, and the first mounting opening is communicated with the second mounting opening through the first mounting groove;
the first adjustment nut and the second wedge pressing plate are located at the second mounting opening, and one end of the first adjustment nut facing away from the second mounting opening abuts against the second wedge pressing plate;
the first wedge pressing plate is located in the first mounting opening.

In one possible implementation, the clearance adjustment device further includes a first abutting plate, a plurality of first adjustment mechanisms are provided, and a plurality of first mounting grooves are provided, and one first adjustment mechanism is arranged in each of the plurality of first mounting groove;
a side of the first wedge pressing plate facing the side wall of the first groove is connected through the first abutting plate, a surface of the first abutting plate facing the side wall of the first groove forms the first abutting surface, and the first wedge pressing plate abuts against the side wall of the first groove through the first abutting plate.

In one possible implementation, one end of the second wedge pressing plate facing the first adjustment nut has a first protrusion, and the first protrusion extends in a direction away from the second wedge surface;
an inner side wall of the first mounting groove is provided with a first boss matched with the first protrusion, and when the first protrusion abuts against a boss surface of the first boss facing the first adjustment nut, there is a gap between the second wedge pressing plate and a bottom wall of the first mounting groove.

In one possible implementation, the side wall of the first groove is inclined toward an interior of the first groove to form a first inclined surface, and the first abutting surface is an inclined surface consistent with the first inclined surface in an inclination angle.

In one possible implementation, the clearance adjustment device further includes a second adjustment mechanism;
the middle adjustment plate has a second groove, and at least a portion of the inner adjustment plate is located in the second groove;
a second mounting groove is provided on a side of the inner adjustment plate facing a side wall of the second groove, and the second adjustment mechanism is located in the second mounting groove;
one end of the second adjustment mechanism is movably abutted against the side wall of the second groove in the first direction, and the other end of the second adjustment mechanism is movably abutted against a groove wall of the second mounting groove in the second direction, such that the inner adjustment plate is pressed against the middle adjustment plate in the second direction.

A second aspect of the embodiments of the present application provides a vehicle, including a vehicle body, a steering column, a steering wheel, a steering device, and the foregoing clearance adjustment device;
the steering column is connected to the inner adjustment plate of the clearance adjustment device, and the outer adjustment plate of the clearance adjustment device is connected to the vehicle body;
one end of the steering column is connected to the steering wheel, and the other end of the steering column is connected to the steering device.

Embodiments of the present application provide a clearance adjustment device for a steering column and a vehicle. The clearance adjustment device includes an inner adjustment plate, a middle adjustment plate and an outer adjustment plate. The outer adjustment plate has a first groove, at least a portion of the middle adjustment plate is located in the first groove, the inner adjustment plate is crimped to the middle adjustment plate, and the inner adjustment plate is configured to be connected to the steering column. The clearance adjustment device further includes a first adjustment mechanism; a first mounting groove is provided on a side of the middle adjustment plate facing a side wall of the first groove, and the first adjustment mechanism is arranged in the first mounting groove; one end of the first adjustment mechanism is movably abutted against the side wall of the first groove in a first direction, and the other end of the first adjustment mechanism is movably abutted against a groove wall of the first mounting groove in a second direction, such that the middle adjustment plate is pressed against the outer adjustment plate in the second direction; and the first direction is perpendicular to the second direction. This enables the middle adjustment plate to adjust a gap between itself and the outer adjustment plate in both the first direction and the second direction, and can increase the sliding friction resistance between the middle adjustment plate and the outer adjustment plate by reducing the gap, thereby reducing the probability of relative displacement between the middle adjustment plate and the outer adjustment plate in the axial direction and radial direction, improving the stability of the clearance adjustment device, and further enhancing the stability of the steering column in the axial direction and radial direction as well as the stability of the vehicle and the driving experience.

### BRIEF DESCRIPTION OF DRAWINGS

To describe the technical solutions in embodiments of the present application or in the prior art more clearly, the following briefly introduces the accompanying drawings required for describing the embodiments of the present application or the prior art. Apparently, the accompanying drawings in the following description are some embodiments of the present application, and persons of ordinary skill in the art may also obtain other drawings from these accompanying drawings without creative effort.
FIG. 1 is a structural schematic diagram of a clearance adjustment device provided by an embodiment of the present application.
FIG. 2 is a structural schematic diagram of a clearance adjustment device provided by an embodiment of the present application viewed from another angle.
FIG. 3 is a partial cross-sectional schematic diagram of the clearance adjustment device in FIG. 1 at position M.
FIG. 4 is a cross-sectional schematic diagram of a first mounting groove in FIG. 3, with a first adjustment mechanism removed.
FIG. 5 is an exploded structural schematic diagram of a first adjustment mechanism in FIG. 3.
FIG. 6 is a structural schematic diagram of a plurality of first adjustment mechanisms connected by a first abutting plate.
FIG. 7 is a partial cross-sectional schematic diagram of the clearance adjustment device in FIG. 1 at position N.
FIG. 8 is a cross-sectional schematic diagram of a second mounting groove in FIG. 7, with a second adjustment mechanism removed.
FIG. 9 is an exploded structural schematic diagram of a second adjustment mechanism in FIG. 7.
FIG. 10 is a structural schematic diagram of a plurality of second adjustment mechanisms connected by a second abutting plate.

Explanation of reference signs:
100-inner adjustment plate; 110-second mounting groove; 120-second boss;
200-middle adjustment plate; 210-first mounting groove; 220-first mounting opening; 230-second mounting opening; 240-first boss; 250-second groove;
300-outer adjustment plate; 310-first groove; 320-mounting hole; 311-first inclined surface;
400-first adjustment mechanism; 410-first adjustment assembly; 420-first wedge pressing plate; 430-first abutting plate; 411-second wedge surface; 412-first adjustment nut; 413-second wedge pressing plate; 414-first spring plate; 415-first protrusion; 421-first wedge surface; 422-first abutting surface;
500-second adjustment mechanism; 510-second adjustment assembly; 520-third wedge pressing plate; 530-second abutting plate; 511-fourth wedge surface; 512-second adjustment nut; 513-fourth wedge pressing plate; 514-second spring plate; 515-second protrusion; 521-third wedge surface; 522-second abutting surface.

### DESCRIPTION OF EMBODIMENTS

As described in the Background, the clearance adjustment device in the above prior art has a gap between the middle adjustment plate and the outer adjustment plate, which causes the technical problem of affecting the stability of the steering column and reducing the driving stability of the vehicle. The reason for this problem is that the outer adjustment plate in the clearance adjustment device is configured to be connected fixedly to the vehicle body and cannot move; there may be a relative sliding between the middle adjustment plate and the outer adjustment plate in the axial direction of the steering column, and there may also be a relative sliding between the inner adjustment plate and the middle adjustment plate in the axial direction to adapt to the axial adjustment of the steering column. Due to the arrangement of sliding connection between the middle adjustment plate and the outer adjustment plate, a certain radial gap exists between the middle adjustment plate and the outer adjustment plate to facilitate sliding, which reduces the sliding friction resistance. However, the existence of this gap will lead to a decrease in the stability of the clearance adjustment device, resulting in the steering column at least having a displacement equal to the gap distance in the radial direction; moreover, the gap between the middle adjustment plate and the outer adjustment plate leads to small sliding friction resistance between the middle adjustment plate and the outer adjustment plate in the axial direction, which makes the clearance adjustment device have low control ability on the axial play of the steering column, thus affecting the stability of the steering column as well as the stability of the vehicle and the driving experience.

In view of the above technical problems, the embodiments of the present application provide a clearance adjustment device for a steering column and a vehicle. The clearance adjustment device includes an inner adjustment plate, a middle adjustment plate and an outer adjustment plate. The outer adjustment plate has a first groove, at least a portion of the middle adjustment plate is located in the first groove, the inner adjustment plate is crimped to the middle adjustment plate, and the inner adjustment plate is configured to be connected to the steering column. The clearance adjustment device further includes a first adjustment mechanism; a first mounting groove is provided on a side of the middle adjustment plate facing a side wall of the first groove, and the first adjustment mechanism is arranged in the first mounting groove; one end of the first adjustment mechanism is movably abutted against the side wall of the first groove in a first direction, and the other end of the first adjustment mechanism is movably abutted against a groove wall of the first mounting groove in a second direction, such that the middle adjustment plate is pressed against the outer adjustment plate in the second direction; and the first direction is perpendicular to the second direction. This enables the middle adjustment plate to adjust a gap between itself and the outer adjustment plate in both the first direction and the second direction, and may increase the sliding friction resistance between the middle adjustment plate and the outer adjustment plate by reducing the gap, thereby reducing the probability of relative displacement between the middle adjustment plate and the outer adjustment plate in the axial direction and radial direction, improving the stability of the clearance adjustment device, and further enhancing the stability of the steering column in the axial direction and radial direction as well as the stability of the vehicle and the driving experience.

To make the foregoing objectives, features, and advantages of the embodiments of the present application clearer and understandable, the technical solutions in the embodiments of the present application are described clearly and comprehensively below with reference to the accompany drawings of the embodiments of the present application. Apparently, the described embodiments are merely some rather than all of embodiments of the present application. Based on the embodiments of the present application, all other embodiments obtained by persons of ordinary skill in the art without creative effort shall fall within the protection scope of the present application.

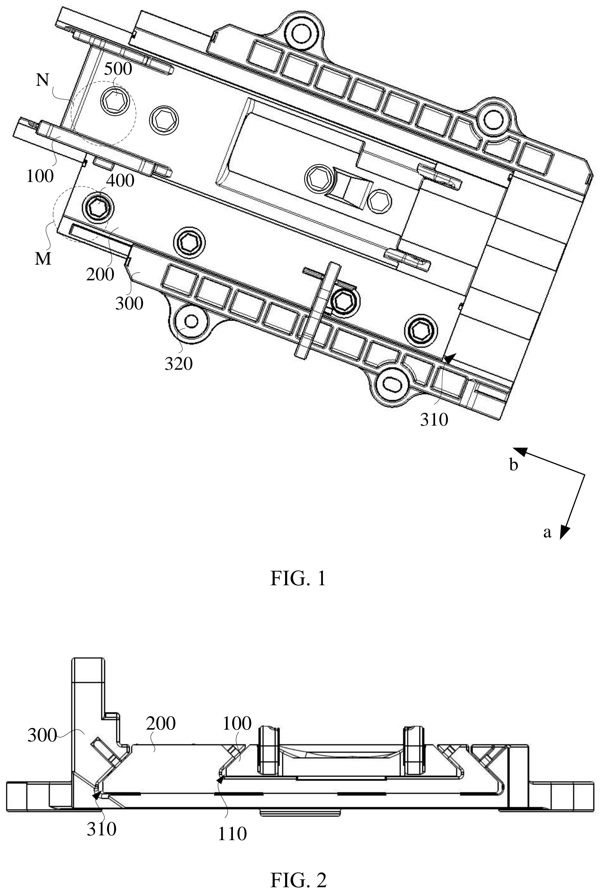

Referring to FIG. 1 and FIG. 2, the embodiments of the present application provide a clearance adjustment device for a steering column, which may include an inner adjustment plate 100, a middle adjustment plate 200 and an outer adjustment plate 300. The outer adjustment plate 300 has a first groove 310, at least a portion of the middle adjustment plate 200 is located in the first groove 310, the inner adjustment plate 100 is crimped to the middle adjustment plate 200, and the inner adjustment plate 100 is configured to be connected to the steering column.

Referring to FIG. 1, in some embodiments, the clearance adjustment device may further include a connection component (not shown in the figure). The outer adjustment plate 300 is fixedly connected to a vehicle body through the connection component, and the connection component may be a bolt or a screw. The outer adjustment plate 300 is provided with a mounting hole 320, and the bolt or screw is threaded through the mounting hole 320 and is connected to the vehicle body.

The middle adjustment plate 200 and the outer adjustment plate 300 are connected in a sliding connection manner, and a portion of the middle adjustment plate 200 is arranged in the first groove 310. The middle adjustment plate 200 may slide along an extending direction of the first groove 310, and the extending direction of the first groove 310 is a direction of axial movement of the steering column (as shown by direction b in FIG. 1). By connecting the middle adjustment plate 200 and the outer adjustment plate 300 in a sliding connection manner, it is convenient for the steering column to move in the axial direction b, and a radial displacement (as shown by direction a in FIG. 1) generated when the steering column is displaced in the axial direction b can be reduced, so as to improve the stability of the steering column. In some embodiments, the inner adjustment plate 100 is configured to be fixedly connected to the steering column, and the inner adjustment plate 100 and the middle adjustment plate 200 may also be connected each other in a sliding connection manner, so that the axial displacement of the steering column can be further increased.

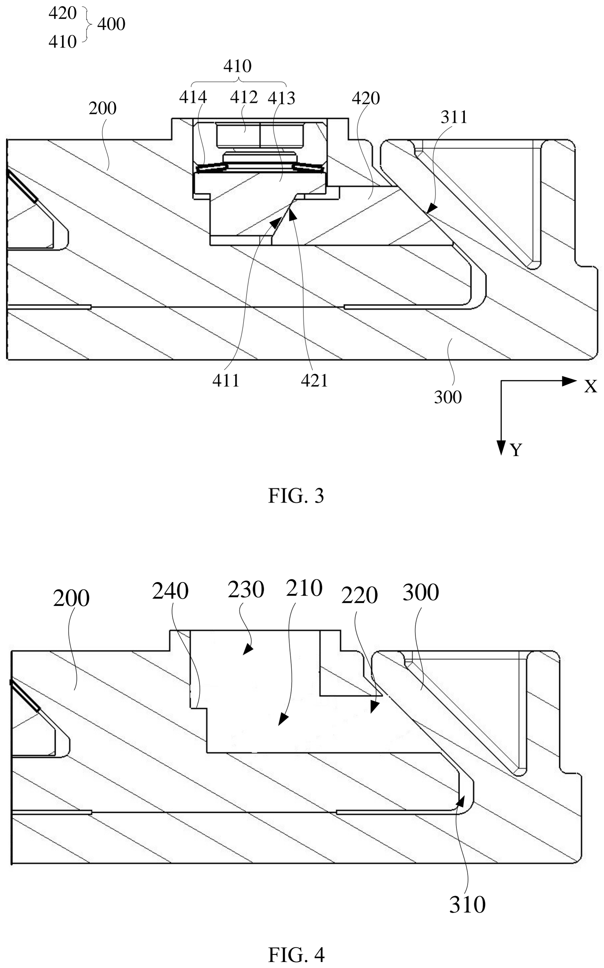

Referring to FIG. 1 and FIG. 3, the clearance adjustment device may further include a first adjustment mechanism 400. A first mounting groove 210 is provided on a side of the middle adjustment plate 200 facing the side wall of the first groove 310, and the first adjustment mechanism 400 is located in the first mounting groove 210. One end of the first adjustment mechanism 400 is arranged toward the side wall of the first groove 310 and is movably abutted against the side wall of the first groove 310 in the first direction (as shown by direction X in FIG. 3), so that the middle adjustment plate 200 is abutted against the side wall of the first groove 310 through the first adjustment mechanism 400, and the middle adjustment plate 200 is abutted against the outer adjustment plate 300 in the first direction through the first adjustment mechanism 400. The other end of the first adjustment mechanism 400 is arranged toward a groove wall of the first mounting groove 210; the groove wall of the first mounting groove 210 may be a bottom wall of the first mounting groove 210, which is perpendicular to the second direction (as shown by direction Y in FIG. 3). The other end of the first adjustment mechanism 400 is movably abutted against the bottom wall of the first mounting groove 210 in the second direction, which allows the middle adjustment plate 200 to move toward the outer adjustment plate 300 through the first adjustment mechanism 400, and the middle adjustment plate 200 to be pressed against the outer adjustment plate 300 in the second direction, thereby increasing the sliding friction resistance between the outer adjustment plate 300 and the middle adjustment plate 200 and reducing the probability of axial play of the steering column. As can be seen from FIG. 3, the first direction and the second direction are two mutually perpendicular directions.

It should be noted that although providing the first adjustment mechanism 400 reduces the gap between the outer adjustment plate 300 and the middle adjustment plate 200 and increases the sliding friction resistance between the outer adjustment plate 300 and the middle adjustment plate 200 in the axial direction of the steering column, the middle adjustment plate 200 may still slide relative to the outer adjustment plate 300 in the axial direction in a damped sliding manner. Furthermore, the magnitude of the sliding friction resistance may be set according to the adjustment requirement of the steering column; for example, if it is necessary to increase the stability of the steering column during axial movement, the pressing degree between the outer adjustment plate 300 and the middle adjustment plate 200 may be increased to improve the sliding friction resistance.

Embodiments of the present application provide a clearance adjustment device for a steering column and a vehicle. The clearance adjustment device includes an inner adjustment plate 100, a middle adjustment plate 200 and an outer adjustment plate 300. The outer adjustment plate 300 has a first groove 310, at least a portion of the middle adjustment plate 200 is located in the first groove 310, the inner adjustment plate 100 is crimped to the middle adjustment plate 200, and the inner adjustment plate 100 is configured to be connected to the steering column. The clearance adjustment device further includes a first adjustment mechanism 400; a first mounting groove 210 is provided on a side of the middle adjustment plate 200 facing a side wall of the first groove 310, and the first adjustment mechanism 400 is arranged in the first mounting groove 210. One end of the first adjustment mechanism 400 is movably abutted against the side wall of the first groove 310 in a first direction, and the other end of the first adjustment mechanism 400 is movably abutted against the groove wall of the first mounting groove 210 in a second direction, such that the middle adjustment plate 200 is pressed against the outer adjustment plate 300 in the second direction, and the first direction is perpendicular to the second direction. This enables the middle adjustment plate 200 to adjust a gap between itself and the outer adjustment plate 300 in both the first direction and the second direction, and can increase the sliding friction resistance between the middle adjustment plate 200 and the outer adjustment plate 300 by reducing the gap, thereby reducing the probability of relative displacement between the middle adjustment plate 200 and the outer adjustment plate 300 in the axial direction and radial direction, improving the stability of the clearance adjustment device, and further enhancing the stability of the steering column in the axial direction and radial direction as well as the stability of the vehicle and the driving experience.

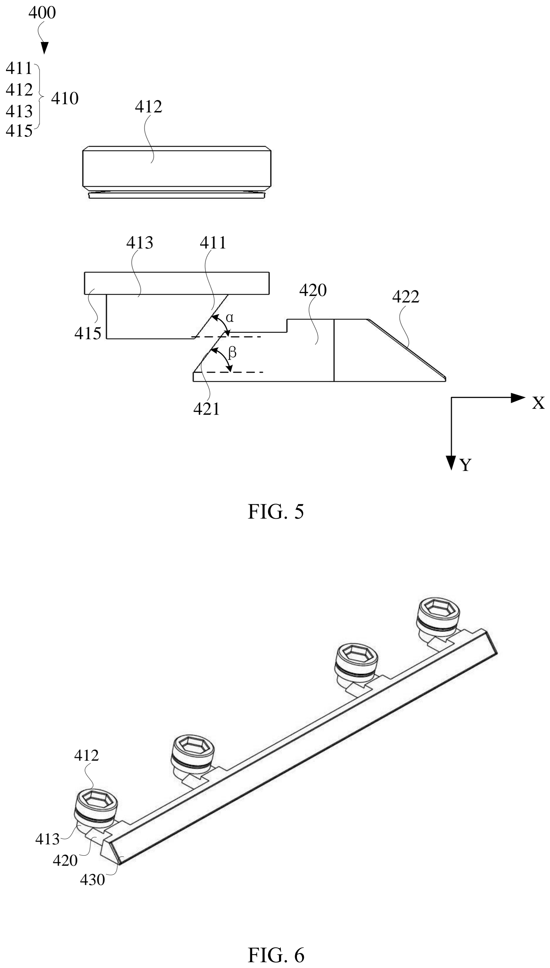

Referring to FIG. 3, the first adjustment mechanism 400 may include a first adjustment assembly 410 and a first wedge pressing plate 420. The first wedge pressing plate 420 has a first wedge surface 421 and a first abutting surface 422 opposite to the first wedge surface 421. The first abutting surface 422 of the first wedge pressing plate 420 is arranged toward the side wall of the first groove 310, and is configured to abut against the side wall of the first groove 310. Referring to FIG. 5, the first wedge surface 421 of the first wedge pressing plate 420 is arranged away from the side wall of the first groove 310 and faces the first adjustment assembly 410; and an included angle between an upward extending direction of the first wedge surface 421 along its inclined plane and the first direction (as shown by included angle β in FIG. 5) is less than 90 degrees, such as 30 degrees, 40 degrees, 60 degrees or 80 degrees. The first adjustment assembly 410 has a second wedge surface 411 matched with the first wedge surface 421, and the second wedge surface 411 is arranged toward the first wedge surface 421, so that the first wedge surface 421 is in contact with the second wedge surface 411. An included angle between the second wedge surface 411 and the first direction (as shown by included angle α in FIG. 5) is also less than 90 degrees, such as 30 degrees, 40 degrees, 60 degrees or 80 degrees.

In a possible implementation, inclination angles of the first wedge surface 421 and the second wedge surface 411 may be the same, so that a contact area between the first wedge surface 421 and the second wedge surface 411 may be increased. In some embodiments, the included angle between the first wedge surface 421 and the first direction may be 45 degrees, and the included angle between the second wedge surface 411 and the first direction may also be 45 degrees.

In specific implementation, the second wedge surface 411 is in contact with the first wedge surface 421. When the first adjustment assembly 410 moves in the second direction, the second wedge surface 411 exerts a force on the first wedge surface 421 to move in the first direction, so that the first wedge pressing plate 420 moves toward the side wall of the first groove 310 in the first direction, and the first abutting surface 422 of the first wedge pressing plate 420 is movably abutted against the side wall of the first groove 310. At the same time, when the first adjustment assembly 410 moves in the second direction, the second wedge surface 411 also exerts a force on the first wedge surface 421 to move in the second direction. This enables the first wedge pressing plate 420 to press tightly against the groove wall of the first mounting groove 210 in the second direction while moving in the first direction; and furthermore, it causes the middle adjustment plate 200 to press tightly against the groove wall of the first groove 310 in the second direction, thereby enabling the middle adjustment plate 200 to be pressed tightly against the outer adjustment plate 300 in the second direction.

The first adjustment mechanism 400 includes the first adjustment assembly 410 and the first wedge pressing plate 420, the first wedge pressing plate 420 has the first wedge surface 421, and the first adjustment assembly 410 has the second wedge surface 411 matched with the first wedge surface 421. This enables the middle adjustment plate 200 to pressed against the outer adjustment plate 300 in the first direction through the first adjustment mechanism 400, and also to press against the outer adjustment plate 300 in the second direction through the first adjustment mechanism 400, which improves the use flexibility of the first adjustment mechanism 400, increases the pressing degree between the middle adjustment plate 200 and the outer adjustment plate 300, reduces the gap between the middle adjustment plate 200 and the outer adjustment plate 300, and further improves the sliding friction resistance between the middle adjustment plate 200 and the outer adjustment plate 300.

Referring to FIG. 3 and FIG. 4, in some embodiments, the first adjustment assembly 410 may include a first adjustment nut 412 and a second wedge pressing plate 413, the second wedge pressing plate 413 has a second wedge surface 411, and a surface of the second wedge pressing plate 413 facing the first wedge pressing plate 420 is the second wedge surface 411. The second wedge pressing plate 413 is located on a side of the first wedge pressing plate 420 away from the outer adjustment plate 300, and the second wedge surface 411 abuts against the first wedge surface 421. For example, as shown in FIG. 3, the second wedge pressing plate 413 is located on the left side of the first wedge pressing plate 420, the first adjustment nut 412 is located above the second wedge pressing plate 413, an outer peripheral side of the first adjustment nut 412 has external threads, and the first adjustment nut 412 and the middle adjustment plate 200 may be connected by means of threaded connection. One end of the first adjustment nut 412 facing the first mounting groove 210 abuts against the second wedge pressing plate 413. When the first adjustment nut 412 moves toward the second wedge pressing plate 413 in the second direction under an external force, the first adjustment nut 412 can drive the second wedge pressing plate 413 to move in the second direction. Through the contact between the second wedge surface 411 of the second wedge pressing plate 413 and the first wedge surface 421 of the first wedge pressing plate 420, the first wedge pressing plate 420 moves simultaneously in both the first direction and the second direction, causing the middle adjustment plate 200 to press against the outer adjustment plate 300 via the adjustment structure.

In specific implementation, the first wedge pressing plate 420 and the second wedge pressing plate 413 may be manufactured from stamped steel plates. The stamped steel plates have high rigidity, which can reduce the torque attenuation of the first adjustment nut 412 at different axial positions caused by the processing errors of the first wedge pressing plate 420 and the second wedge pressing plate 413, and improve the operational stability of the first adjustment mechanism 400.

Referring to FIG. 3, in a possible implementation, the side wall of the first groove 310 is inclined toward an interior of the first groove 310 to form a first inclined surface 311, and the first abutting surface 422 is an inclined surface that has the same inclination angle as the first inclined surface 311.

Referring to FIG. 3, in a possible implementation, the first adjustment assembly 410 may further include a first spring plate 414. The first spring plate 414 is arranged between the first adjustment nut 412 and the second wedge pressing plate 413, and the first adjustment nut 412 is connected to the second wedge pressing plate 413 via the first spring plate 414. By providing the first spring plate 414, it can make the first adjustment nut 412 to abut against the second wedge pressing plate 413 through the first spring plate 414, so as to reduce the friction loss between the first adjustment nut 412 and the second wedge pressing plate 413, and avoid the loosening of the contact between the first adjustment nut 412 and the second wedge pressing plate 413, which would lead to a reduction in the pressing effect between the middle adjustment plate 200 and the outer adjustment plate 300, thereby improving the operational stability of the first adjustment mechanism 400. In some embodiments, the first spring plate 414 may be a wave spring plate, and first spring plates 414 with different stiffness can be selected according to the pressing force of the first adjustment nut 412.

Referring to FIG. 4 and FIG. 5, in specific implementation, the middle adjustment plate 200 is provided with a first mounting opening 220 and a second mounting opening 230. The second mounting opening 230 is provided on a surface of the middle adjustment plate 200 in the second direction, extends in the second direction and is communicated with the first mounting groove 210. The first mounting opening 220 is provided on a surface of the middle adjustment plate 200 facing the side wall of the first groove 310, extends in the first direction and is communicated with the first mounting groove 210. The first mounting opening 220 is communicated with the second mounting opening 230 via the first mounting groove 210. The first adjustment nut 412 and the second wedge pressing plate 413 are arranged in the first mounting groove 210 through the second mounting opening 230. One end of the first adjustment nut 412 facing away from the second mounting opening 230 abuts against the second wedge pressing plate 413, and the first wedge pressing plate 420 is located in the first mounting opening 220 and installed in the first mounting groove 210 through the first mounting opening 220. The first mounting opening 220 and the second mounting opening 230 are communicated each other by the first mounting groove 210, the first wedge pressing plate 420 is arranged in the first mounting opening 220, and the first adjustment nut 412 and the second wedge pressing plate 413 are arranged in the second mounting opening 230, thereby improving the layout compactness of the first adjustment mechanism 400 and enhancing the space utilization rate of the middle adjustment plate 200.

Referring to FIG. 4 and FIG. 5, one end of the second wedge pressing plate 413 facing the first adjustment nut 412 is provided with a first protrusion 415. The first protrusion 415 extends in a direction away from the second wedge surface 411. An inner side wall of the first mounting groove 210 is provided with a first boss 240 matched with the first protrusion 415, and a boss surface of the first boss 240 faces the first adjustment nut 412. When the first protrusion 415 abuts against the boss surface of the first boss 240, there is a gap between the second wedge pressing plate 413 and a bottom wall of the first mounting groove 210. Through the matching connection between the first protrusion 415 and the first boss 240, it can limit a displacement of the second wedge pressing plate 413 in the second direction, and prevent the second wedge pressing plate 413 from abutting against the bottom wall of the first mounting groove 210 in the second direction, thereby avoiding over-screwing of the first adjustment nut 412, reducing the probability of damage due to over-screwing between the second wedge pressing plate 413 and the groove wall of the first mounting groove 210, and improving the service life of the first adjustment mechanism 400.

Referring to FIG. 6, in a possible implementation, the clearance adjustment device may further include a first abutting plate 430, where there exists a plurality of first adjustment mechanisms 400 and a plurality of first mounting grooves 210. One first adjustment mechanism 400 is arranged in each first mounting groove 210. The plurality of first mounting grooves 210 are arranged along the extending direction of the first groove 310, and the plurality of first grooves 310 are located on a side of the middle adjustment plate 200. By providing a plurality of first mounting grooves 210 and arranging each first adjustment mechanism 400 in one first mounting groove 210, an abutting area between the first abutting surface 422 and the side wall of the first groove 310 can be increased, thereby improving the adjustment stability of the gap between the middle adjustment plate 200 and the outer adjustment plate 300 that is adjusted by the first adjustment mechanism 400.

In specific implementation, the number of the first adjustment mechanisms 400 in the clearance adjustment device may be two, three, four, five, or even more. In one example, the clearance adjustment device may have four first adjustment mechanisms 400 and four first mounting grooves 210, with one first adjustment mechanism 400 being arranged in each mounting groove. During operation, when the steering column moves in the radial direction, at least three of the four first adjustment mechanisms 400 can abut against the side wall of the first groove 310.

Referring to FIG. 6, the sides of a plurality of first wedge pressing plates 420 facing the side wall of the first groove 310 are connected each other by the first abutting plate 430. A surface of the first abutting plate 430 facing the side wall of the first groove 310 forms a first abutting surface 422, and the first wedge pressing plate 420 abuts against the side wall of the first groove 310 via the first abutting plate 430. By providing the first abutting plate 430, the first wedge pressing plates 420 is abutted against the side wall of the first groove 310 by the first abutting plate 430, which can increase a contact area between the first adjustment mechanism 400 and the side wall of the first groove 310, thereby further improving the sliding friction resistance, enhancing the contact stability between the abutting surface and the side wall of the first groove 310, and preventing the first wedge pressing plates 420 from jumping during the movement relative to the side wall of the first groove 310.

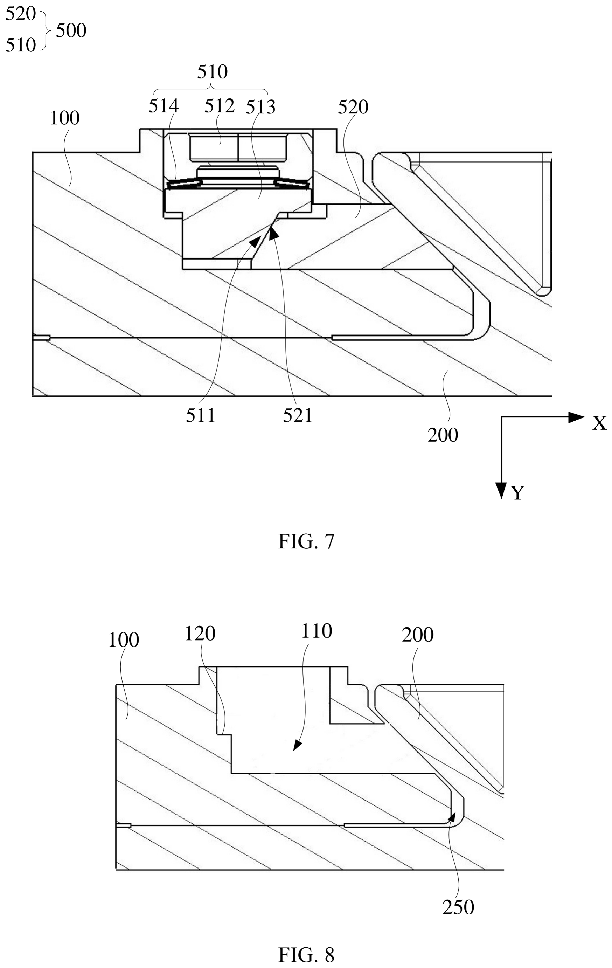

Referring to FIG. 7, in a possible implementation, the clearance adjustment device may further include a second adjustment mechanism 500. The middle adjustment plate 200 has a second groove 250, at least a portion of the inner adjustment plate 100 is located in the second groove 250, a second mounting groove 110 is provided on a side of the inner adjustment plate 100 facing a side wall of the second groove 250, and the second adjustment mechanism 500 is located in the second mounting groove 110. One end of the second adjustment mechanism 500 is movably abutted against the side wall of the second groove 250 in the first direction (as shown by direction X in FIG. 7), and the other end of the second adjustment mechanism 500 is movably abutted against a groove wall of the second mounting groove 110 in the second direction (as shown by direction Y in FIG. 7), such that the inner adjustment plate 100 is pressed against the middle adjustment plate 200 in the second direction Y. By providing the second adjustment mechanism 500, the inner adjustment plate 100 may adjust the gap between itself and the middle adjustment plate 200 in both the first direction X and the second direction Y, and may increase the sliding friction resistance between the inner adjustment plate 100 and the middle adjustment plate 200 by gap reduction, thereby reducing the probability of displacement between the middle adjustment plate 200 and the inner adjustment plate 100 in the axial and radial directions, further improving the stability of the clearance adjustment device, and further enhancing the stability of the steering column in the axial and radial directions as well as the stability of the vehicle and the driving experience.

Referring to FIG. 7 to FIG. 9, in some embodiments, the second adjustment mechanism 500 and the first adjustment mechanism 400 may adopt the same structural arrangement, and the number of second adjustment mechanism 500 may also be the same as that of the first adjustment mechanism 400 in the clearance adjustment device. For example, the second adjustment mechanism 500 may include a second adjustment assembly 510 and a third wedge pressing plate 520; and the third wedge pressing plate 520 has a third wedge surface 521 and a second abutting surface 522 opposite to the third wedge surface 521. The second abutting surface 522 of the third wedge pressing plate 520 is arranged toward the side wall of the second groove 250, and is configured to abut against the side wall of the second groove 250. The third wedge surface 521 of the third wedge pressing plate 520 is arranged away from the side wall of the second groove 250 and faces the second adjustment assembly 510. The second adjustment assembly 510 has a fourth wedge surface 511 matched with the third wedge surface 521, and the fourth wedge surface 511 is arranged toward the third wedge surface 521, so that the third wedge surface 521 is in contact with the fourth wedge surface 511.

Continuing to refer to FIG. 7, the second adjustment assembly 510 includes a second adjustment nut 512 and a fourth wedge pressing plate 513, and the fourth wedge pressing plate 513 has a fourth wedge surface 511. The fourth wedge pressing plate 513 is located on a side of the third wedge pressing plate 520 away from the middle adjustment plate 200, and the fourth wedge surface 511 abuts against the third wedge surface 521. The second adjustment nut 512 is in threaded connection with the inner adjustment plate 100. One end of the second adjustment nut 512 facing the second mounting groove 110 abuts against the fourth wedge pressing plate 513, and the fourth wedge pressing plate 513 is driven by the second adjustment nut 512 to move in the second direction Y.

Referring to FIG. 7, in some embodiments, the second adjustment assembly 510 further includes a second spring plate 514, which is arranged between the second adjustment nut 512 and the fourth wedge pressing plate 513. The second adjustment nut 512 is connected to the fourth wedge pressing plate 513 by the second spring plate 514. In specific implementation, the second spring plate 514 may also be a wave spring plate.

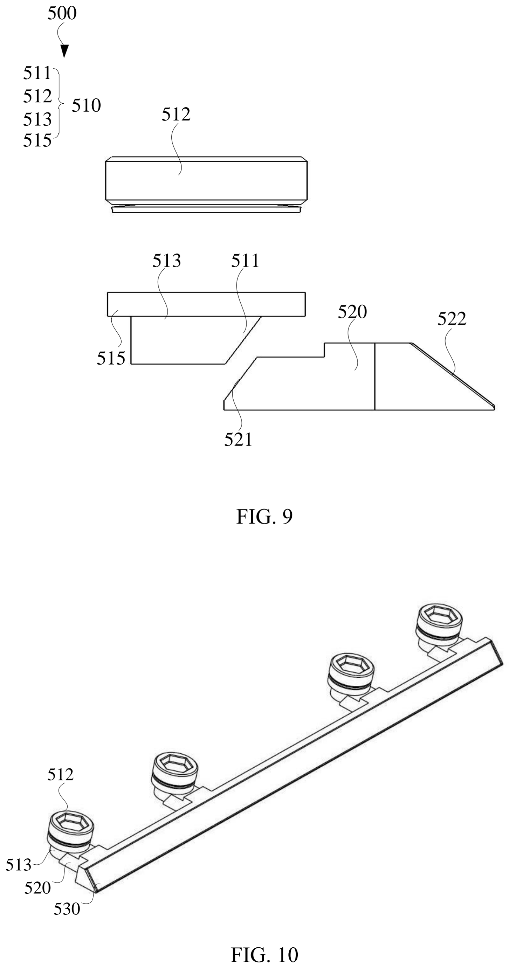

Referring to FIG. 8 and FIG. 9, one end of the fourth wedge pressing plate 513 facing the second adjustment nut 512 has a second protrusion 515, and the second protrusion 515 extends in a direction away from the fourth wedge surface 511. An inner side wall of the second mounting groove 110 is provided with a second boss 120 matched with the second protrusion 515, and a boss surface of the second boss 120 faces the second adjustment nut 512. When the second protrusion 515 abuts against the boss surface of the second boss 120, there is a gap between the fourth wedge pressing plate 513 and the bottom wall of the second mounting groove 110.

Referring to FIG. 10, in a possible implementation, the clearance adjustment device may further include a second abutting plate 530, where there exists a plurality of second adjustment mechanisms 500 and a plurality of second mounting grooves 110. One second adjustment mechanism 500 is arranged in each second mounting groove 110. Sides of a plurality of third wedge pressing plates 520 facing the side wall of the second groove 250 are connected each other via the second abutting plate 530, a surface of the second abutting plate 530 facing the side wall of the second groove 250 forms the second abutting surface 522, and the third wedge pressing plate 520 abuts against the side wall of the second groove 250 by the second abutting plate 530.

Embodiments of the present application further provide a vehicle, which may include a vehicle body, a steering column, a steering wheel, a steering device, and the foregoing clearance adjustment device. The steering column is connected to the inner adjustment plate of the clearance adjustment device, and the outer adjustment plate of the clearance adjustment device is connected to the vehicle body. One end of the steering column is connected to the steering wheel, and the other end of the steering column is connected to the steering device. By connecting the clearance adjustment device in the present application to the steering column, the radial displacement of the steering column can be reduced, and the axial play of the steering column can be reduced, thereby improving the adjustment stability of the steering column, and further enhancing the driving stability of the vehicle and the driving experience.

The various embodiments or implementations in this description are described in a progressive manner. Each embodiment focuses on the differences from other embodiments, and the same or similar parts between various embodiments may refer to each other.

It should be noted that phrases mentioned in the specification, such as "in specific implementation", "in some embodiments", "in this embodiment", and "exemplarily", indicate that the described embodiment may include a specific feature, structure, or characteristic, but not every embodiment necessarily includes the specific feature, structure, or characteristic. In addition, such phrases do not necessarily refer to the same embodiment. Furthermore, when describing a specific feature, structure, or characteristic in combination with an embodiment, it is within the knowledge scope of those skilled in the art to realize such feature, structure, or characteristic in combination with other embodiments that are explicitly or implicitly described.

In general, terms should be understood at least partially based on their use in the context. For example, at least partially depending on the context, the term "one or more" used in the text may be used to describe any singular feature, structure, or characteristic, or may be used to describe a combination of plural features, structures, or characteristics. Similarly, at least partially depending on the context, terms such as "a" or "the" may also be understood as conveying a singular usage or a plural usage.

It should be easily understood that the terms "on...... ", "above...... ", and "over......" in the present disclosure should be interpreted in the broadest manner, such that "on......" not only means "directly on something" but also includes the meaning of "on something with an intermediate feature or layer therebetween"; and "above......" or "over......" not only includes the meaning of "being above or over something", but also may include the meaning of "being above or over something without an intermediate feature or layer therebetween (i.e., directly on something)".

In addition, for the convenience of explanation, spatially relative terms may be used in the text, such as "below", "under", "lower", "above", "upper", etc., to describe the relationship of one element or feature relative to another element or feature as shown in the figures. Spatially relative terms are intended to include different orientations of the device in use or operation other than the orientation shown in the figures. The device may have other orientations (rotated by 90 degrees or in other orientations), and the spatially relative descriptors used in the text may also be interpreted accordingly.

Finally, it should be noted that the above embodiments are only used to illustrate the technical solutions of the present application, but not to limit them; although the present application has been described in detail with reference to the foregoing embodiments, persons of ordinary skill in the art should understand that they can still modify the technical solutions recorded in the foregoing embodiments, or make equivalent replacement of some or all of the technical features therein; and such modifications or replacements do not make the essence of the corresponding technical solutions deviate from the scope of the technical solutions of the embodiments of the present application.

## Claims

1. A clearance adjustment device for a steering column, comprising an inner adjustment plate, a middle adjustment plate and an outer adjustment plate; wherein
the outer adjustment plate has a first groove, and at least a portion of the middle adjustment plate is located in the first groove;
the inner adjustment plate is crimped to the middle adjustment plate, and the inner adjustment plate is configured to be connected to the steering column;
the clearance adjustment device further comprises a first adjustment mechanism, a first mounting groove is provided on a side of the middle adjustment plate facing a side wall of the first groove, and the first adjustment mechanism is located in the first mounting groove;
one end of the first adjustment mechanism is movably abutted against the side wall of the first groove in a first direction, and the other end of the first adjustment mechanism is movably abutted against a groove wall of the first mounting groove in a second direction, such that the middle adjustment plate is pressed against the outer adjustment plate in the second direction; and the first direction is perpendicular to the second direction.

2. The clearance adjustment device according to claim 1, wherein the first adjustment mechanism comprises a first adjustment assembly and a first wedge pressing plate;
the first wedge pressing plate has a first wedge surface and a first abutting surface opposite to the first wedge surface, and the first adjustment assembly has a second wedge surface matched with the first wedge surface;
the first abutting surface of the first wedge pressing plate is movably abutted against the side wall of the first groove in the first direction under a drive of the first adjustment assembly;
the first adjustment assembly moves in the second direction and presses against the middle adjustment plate and the outer adjustment plate through the first wedge pressing plate.

3. The clearance adjustment device according to claim 2, wherein the first adjustment assembly comprises a first adjustment nut and a second wedge pressing plate, and the second wedge pressing plate has a second wedge surface;
the second wedge pressing plate is located on a side of the first wedge pressing plate away from the outer adjustment plate, and the second wedge surface abuts against the first wedge surface;
the first adjustment nut is in threaded connection with the middle adjustment plate, and one end of the first adjustment nut facing the first mounting groove abuts against the second wedge pressing plate, and the second wedge pressing plate is driven by the first adjustment nut to move in the second direction.

4. The clearance adjustment device according to claim 3, wherein the first adjustment assembly further comprises a first spring plate, the first spring plate is arranged between the first adjustment nut and the second wedge pressing plate, and the first adjustment nut is connected to the second wedge pressing plate through the first spring plate.

5. The clearance adjustment device according to claim 4, wherein the middle adjustment plate is provided with a first mounting opening and a second mounting opening; the second mounting opening is provided on a surface of the middle adjustment plate in the second direction, the first mounting opening is provided on a surface of the middle adjustment plate facing the side wall of the first groove, and the first mounting opening is communicated with the second mounting opening through the first mounting groove;
the first adjustment nut and the second wedge pressing plate are located at the second mounting opening, and one end of the first adjustment nut facing away from the second mounting opening abuts against the second wedge pressing plate;
the first wedge pressing plate is located in the first mounting opening.

6. The clearance adjustment device according to claim 5, wherein the clearance adjustment device further comprises a first abutting plate, a plurality of first adjustment mechanisms are provided, and a plurality of first mounting grooves are provided, and one first adjustment mechanism is arranged in each of the plurality of first mounting grooves;
a side of the first wedge pressing plate facing the side wall of the first groove is connected through the first abutting plate, a surface of the first abutting plate facing the side wall of the first groove forms the first abutting surface, and the first wedge pressing plate abuts against the side wall of the first groove through the first abutting plate.

7. The clearance adjustment device according to claim 5, wherein one end of the second wedge pressing plate facing the first adjustment nut has a first protrusion, and the first protrusion extends in a direction away from the second wedge surface;
an inner side wall of the first mounting groove is provided with a first boss matched with the first protrusion, and when the first protrusion abuts against a boss surface of the first boss facing the first adjustment nut, there is a gap between the second wedge pressing plate and a bottom wall of the first mounting groove.

8. The clearance adjustment device according to claim 7, wherein the side wall of the first groove is inclined toward an interior of the first groove to form a first inclined surface, and the first abutting surface is an inclined surface consistent with the first inclined surface in an inclination angle.

9. The clearance adjustment device according to any one of claims 1-8, wherein the clearance adjustment device further comprises a second adjustment mechanism;
the middle adjustment plate has a second groove, and at least a portion of the inner adjustment plate is located in the second groove;
a second mounting groove is provided on a side of the inner adjustment plate facing a side wall of the second groove, and the second adjustment mechanism is located in the second mounting groove;
one end of the second adjustment mechanism is movably abutted against the side wall of the second groove in the first direction, and the other end of the second adjustment mechanism is movably abutted against a groove wall of the second mounting groove in the second direction, such that the inner adjustment plate is pressed against the middle adjustment plate in the second direction.

10. A vehicle, comprising a vehicle body, a steering column, a steering wheel, a steering device, and the clearance adjustment device according to any one of claims 1-9; wherein
the steering column is connected to the inner adjustment plate of the clearance adjustment device, and the outer adjustment plate of the clearance adjustment device is connected to the vehicle body;
one end of the steering column is connected to the steering wheel, and the other end of the steering column is connected to the steering device.
